**Europäisches Patentamt**

**European Patent Office**

**Office européen des brevets**

(19)

(11) Veröffentlichungsnummer: **0 044 325**
**B1**

(12) # EUROPÄISCHE PATENTSCHRIFT

(45) Veröffentlichungstag der Patentschrift:
**22.05.85**

(51) Int. Cl.⁴: **F 16 K 11/20**

(21) Anmeldenummer: **81900315.3**

(22) Anmeldetag: **16.01.81**

(86) Internationale Anmeldenummer:
**PCT/HU 81/00002**

(87) Internationale Veröffentlichungsnummer:
**WO 81/02053 (23.07.81** Gazette **81/17)**

(54) **MISCHVENTIL FÜR FLÜSSIGKEITEN, INSBESONDERE KALTES UND HEISSES WASSER.**

(30) Priorität: **17.01.80 HU 7980**
**27.03.80 HU 71680**

(43) Veröffentlichungstag der Anmeldung:
**27.01.82 Patentblatt 82/4**

(45) Bekanntmachung des Hinweises auf die Patenterteilung:
**22.05.85 Patentblatt 85/21**

(84) Benannte Vertragsstaaten:
**AT DE**

(56) Entgegenhaltungen:
**CH - A - 549 748**
**DE - A - 2 413 420**
**DE - A - 2 735 544**
**DE - B - 1 144 982**
**DE - B - 1 675 464**
**DE - B - 1 949 318**
**FR - A - 2 049 250**
**FR - A - 2 149 630**
**FR - A - 2 402 133**
**FR - A - 2 415 765**
**US - A - 3 416 569**
**US - A - 3 433 264**
**US - A - 3 459 223**

(73) Patentinhaber: **GENERALIMPEX, u. 156 Bartok Béla,**
**H-1113 Budapest (HU)**

(72) Erfinder: **BOLGAR, György, u. 57/a Nagybányai,**
**H-1025 Budapest (HU)**
Erfinder: **VIDOR, Gyözö, u. 121 Fehérvári,**
**H-1119 Budapest (HU)**

(74) Vertreter: **Lehn, Werner, Dipl.-Ing. et al, Hoffmann, Eitle & Partner Patentanwälte Arabellastrasse 4 (Sternhaus), D-8000 München 81 (DE)**

## Beschreibung

Die Erfindung bezieht sich auf ein Mischventil für Flüssigkeiten, insbesondere kaltes und heisses Wasser, mit einem Ventilgehäuse, das mit zwei Einflüssen, einem Ausfluss sowie einem bewegbaren Mischverhältnis-Steuerelement und einem bewegbaren Mengensteuerelement versehen ist, wobei das Mischverhältnis-Steuerelement und das Mengensteuerelement eine Plattendichtung bilden, das eine Steuerelement mit einem Regelorgan mitdrehbar und das andere Steuerelement mit einem Regelorgan verschiebbar angeordnet ist, ein Steuerelement eine mit dem Ausfluss verkehrende Ausflussöffnung und zwei dazu symmetrisch angeordnete, mit den Einflüssen in Verbindung bringbare Einflussöffnungen aufweist, die mit einem äusseren und einem inneren Kreisbogen begrenzt sind, und ein Steuerelement am seiner dem anderen Steuerelement zugekehrten Stirnseite eine Kerbe hat, die mit der Ausflussöffnung des anderen Steuerelements in Verbindung steht und mit dessen Einflussöffnungen in Verbindung bringbar ausgebildet ist, sowie Abrundungsradien der Kerbe mit dem inneren Kreisbogen der Einflussöffnungen übereinstimmen.

Es sind mechanisch gesteuerte Mischventile z. B. aus der DE-B-1 675 464 bekannt, welche zur separaten Einstellung der Durchflussmenge und des Mischverhältnisses mit zwei Betätigungselementen (Regelorganen) versehen sind. Diese Vorschläge erfordern aber eine sehr verwickelte, teuere Druckausgleichseinheit und ermöglichen trotzdem nicht, dass bei der Veränderung der Durchflussmenge die Temperatur eines Kalt- und Warmwasser-Gemisches konstant bleibt.

Die DE-B-1 949 318 beschreibt einarmige Mischventile, welche – neben ihrer einfachen Konstruktion und ihrer inneren Regeliereinheit von sehr langer Lebensdauer (durch die Verwendung von Keramikdichtung) – den Nachteil haben, dass infolge des einzigen Betätigungselementes, das zweierlei Bewegungen ausführen muss, ihre Betätigung nicht eindeutig ist. Der Betätigungshebel verrückt sich leichter in der Drehrichtung (Temperaturregelung) als in Hub- und Senkrichtung (Mengenregelung), so dass sich die Temperatur beim Schliessen verändert. Bei jeder Öffnung muss deshalb sowohl die Menge, als auch die Temperatur neu geregelt werden. Darüber hinaus verändert sich die Wassertemperatur bei jedem erwähnten Mischventil mit der Veränderung der Durchflussmenge.

Ein Mischventil der eingangs beschriebenen Art ist aus der DE-A-2 735 544 bekannt. Bei diesem Mischventil bleibt die Temperatur des Kalt- und Warmwassergemisches nicht konstant. Entweder vermischen sich das kalte und das warme Wasser vor dem Öffnen des Mischventils, weshalb auch Rückschlagventile für beide Leitungen erforderlich sind, oder es wird sowohl die Menge als auch die Temperatur im gleichen Querschnitt reguliert, so dass eine Verstimmung von Temperatur und Menge bei jeder Regulierung unvermeidlich ist.

Der Erfindung liegt die Aufgabe zugrunde, ein Mischventil der eingangs beschriebenen Art zu schaffen, bei welchem unter Verwendung einfacher mechanischer, handbedienbarer Steuerelementen das Mischverhältnis, d.h. die eingestellte Temperatur unabhängig von der Veränderung der Durchflussmenge konstant bleibt.

Diese Aufgabe wird mit einem Mischventil der eingangs beschriebenen Art erfindungsgemäss dadurch gelöst, dass

– die mechanische Verstelleinrichtung der beiden bewegbaren Steuerelemente aus zwei voneinander unabhängig betätigbaren Regelorganen besteht,

– das Mischverhältnis-Steuerelement radial verschiebbar und das Mengensteuerelement drehbar angeordnet ist,

– der Ausfluss und die Ausflussöffnung koaxial mit der Gehäuseachse angeordnet sind,

– die Einflussöffnungen symmetrisch zur Ausflussöffnung angeordnet sind.

Das Regelorgan für das Mengensteuerelement kann als ein Dreharm ausgebildet werden, der mit Aufsätzen des Mengensteuerelementes zwangsläufig verbunden ist, wobei die Seitenflächen der Aufsätze die Drehbewegung des Mengensteuerelementes begrenzen, während das Regelorgan für das Mischverhältnis-Steuerelement als ein Drehknopf ausgestaltet und mit dem Dreharm koaxial angeordnet ist, wobei der Drehknopf mit einer exzentrisch angeordneten zylindrischen Steuerbahn versehen ist, durch die das Mischverhältnis-Steuerelement in einer Kerbe einer stehenden Führungsscheibe in radialer Richtung verschiebbar ist.

Es ist auch eine solche Ausführung möglich, bei welcher das Mengensteuerelement und eine Stehscheibe mit einer mit der Ausflussöffnung des Mengensteuerelementes verbundenen Ausflussöffnung sowie mit einerseits mit den Einflüssen verbundenen, andererseits mit den Einflussöffnungen des Mengensteuerelementes verbindbaren Einflussöffnungen versehen ist.

Die durch die Erfindung erreichten Vorteile sind im wesentlichen darin zu sehen, dass die Konstruktion des Mischventils einfach, einwandfrei und leicht bedienbar ist, ferner nur mechanische Elemente enthält. Neben der feinen Mischverhältnis(gegebenenfalls Temperatur-)-Regelung wird auch eine feine Mengenregelung und eine vollkommene Unabhängigkeit des Mischverhältnisses von der Menge (auch bei geringen Durchflussmengen) gegenüber den bekannten Mischventilen ermöglicht, wodurch eine bedeutende Energie- und Wasserersparung erreicht werden kann.

Kurze Beschreibung der Zeichnungen

Im folgenden wird die Erfindung anhand von ein Ausführungsbeispiel darstellenden Zeichnungen näher erläutert. Es zeigt

Figur 1 einen Längsschnitt eines Ausführungsbeispiels des erfindungsgemässen Mischventils,

Figur 2 einen Schnitt des Mischventils nach Figur 1, entlang der Linie II–II in Figur 1,

Figur 3 einen Schnitt entlang der Linie III–III in Figur 1,

Figur 4 eine Draufsicht eines Details des Mischventils gemäss Figur 1–3,

Figur 5 einen Schnitt entlang der Linie V–V in Figur 4,

Figur 6 einen Schnitt entlang der Linie VI–VI in Figur 4,

Figur 7 eine auseinandergezogene, perspektivische Ansicht von Teilen nach Figur 4, und

Figur 8–10 Stirnansichten von Teilen nach Figur 7, wobei Figur 8 eine Unteransicht darstellt.

In den Zeichnungen sind ähnliche Einzelheiten mit den gleichen Bezugszeichen bezeichnet.

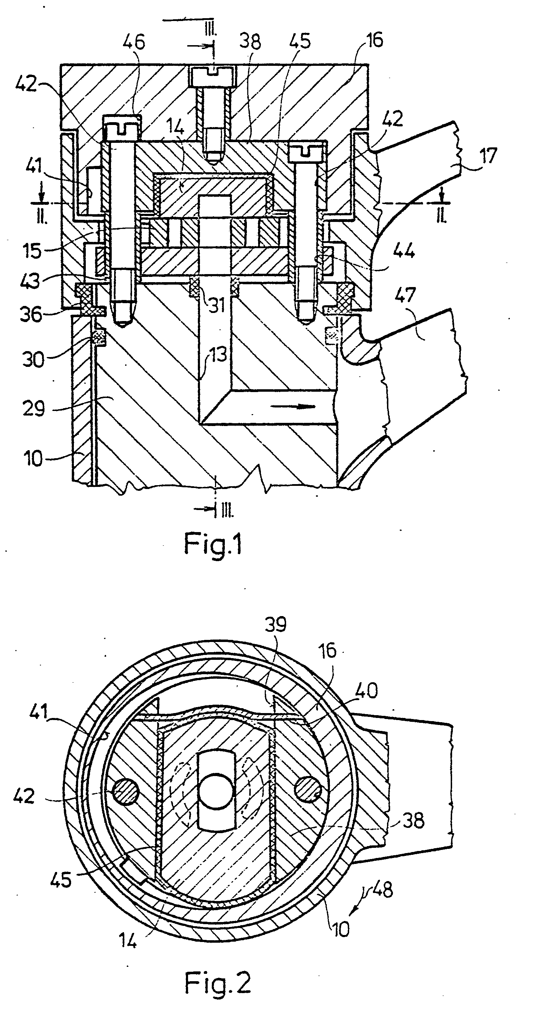

In Figuren 1–3 ist das zusammengebaute Mischventil im geschlossenen Zustand gezeigt, welches in bekannter Weise ein, im wesentlichen zylinderförmiges hohles Ventilgehäuse 10 umfasst, das einen Einfluss 11 in diesem Fall für Heisswasser, einen anderen Einfluss 12 für Kaltwasser und einen Ausfluss 13 für Mischwasser aufweist. Im Ventilgehäuse 10 sind zwei Steuerelemente, d.h. ein Mischverhältnis-Steuerelement 14 und ein Mengensteuerelement 15 bewegbar angeordnet.

Gemäss der Erfindung bildet das scheibenartige Mischverhältnis-Steuerelement 14 mit dem scheibenartigen Mengensteuerelement 15 eine Plattendichtung. Dabei ist das Mischverhältnis-Steuerelement 14 durch einen Drehknopf 16 mitdrehbar, und das Mengensteuerelement 15 durch einen Dreharm 17 verschiebbar angeordnet. Dies ist im Weiteren näher erläutert.

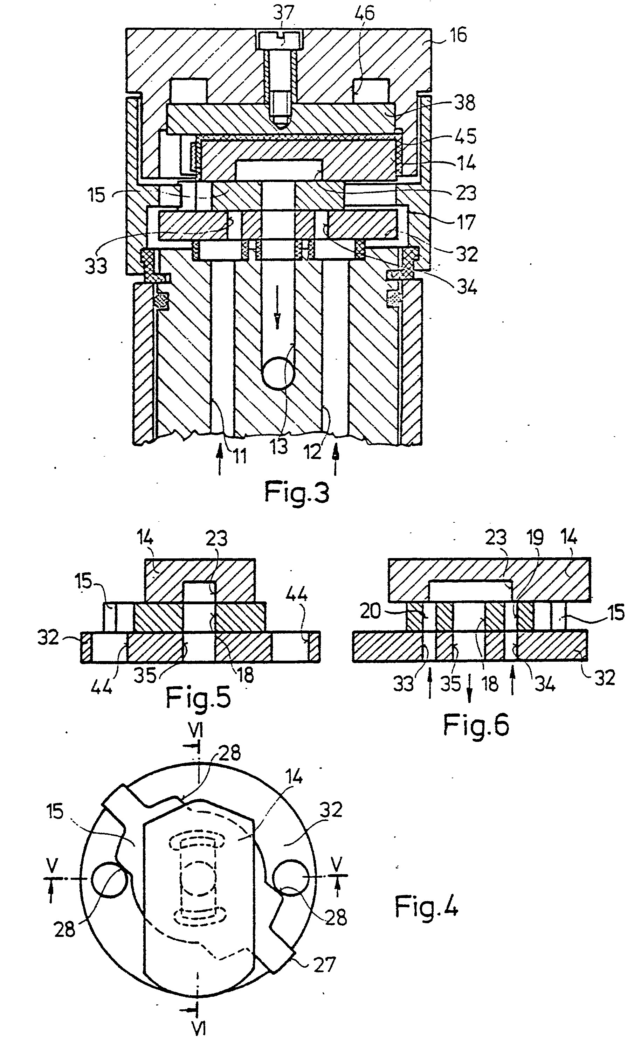

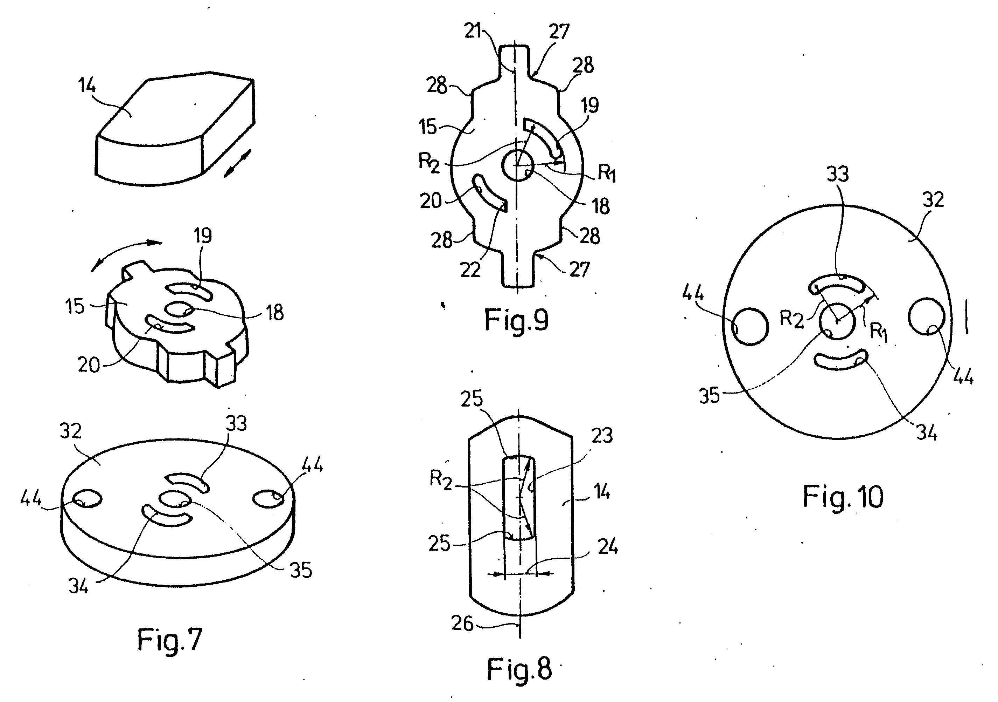

Das Mengensteuerelement 15 hat eine mittige Ausflussöffnung 18, die mit dem Ausfluss 13 verbunden ist, darüber hinaus zwei, dazu symmetrisch angeordnete Einflussöffnungen 19, 20, die mit den Einflüssen 11 bzw. 12 – beim Drehen des Mengensteuerelementes 15 – verbindbar ausgebildet sind (Fig. 6, 7, 9). Die Einflussöffnungen 19, 20 sind entlang ihrer Längsseiten mit einem äusseren und einem inneren Kreisbogen $R_1$ bzw. $R_2$ begrenzt. Wie aus Fig. 9 zu ersehen ist, ist eine Begrenzungsfläche 22 der Einflussöffnungen 19, 20 parallel mit einer Längsachse 21 des Mengensteuerelementes 15 und als eine Tangente der Ausflussöffnung 18 ausgebildet.

Im Mischverhältnis-Steuerelement 14 ist eine Kerbe 23 an seiner dem Mengensteuerelement 15 zugekehrten Stirnseite ausgespart, die mit der Ausflussöffnung 18 des Mengensteuerelementes 15 verkehrt, und mit den Einflussöffnungen 19, 20 des Mengensteuerelementes 15 – beim Drehen des Mengensteuerelementes 15 – in Verbindung bringbar ausgebildet sind. Die Breite der Kerbe 23 stimmt in diesem Falle mit dem Durchmesser der Ausflussöffnung 18 überein. Die Abrundungsradien 25 der Kerbe 23 sind mit den inneren Kreisbogen $R_2$ der Einflussöffnungen 19, 20 übereinstimmend. Die Kerbe 23 ist parallel mit einer Längsachse 26 des Mischverhältnis-Steuerelementes 14, in diesem Fall jedoch in Querrichtung exzentrisch ausgebildet (Fig. 8).

Der Dreharm 17 ist mit zwei Aufsätzen 27 des Mengensteuerelementes 15 zwangsläufig mitdrehbar verbunden, wozu das Mengensteuerelement 15 zwei, die Ende der Aufsätze 27 aufnehmende Kerben (nicht dargestellt) aufweist. Die Aufsätze 27 weisen ferner Seitenflächen 28 auf, die als Anschläge für das Mengensteuerelement 15 dienen (Fig. 4 und 9).

Im Ventilgehäuse 10 ist ein Zwischenstück 29 durch einen «O»-Ring abgedichtet angeordnet. Im Zwischenstück 29 sind die Kanäle der Einflüsse 11, 12 und des Ausflusses 13 ausgestaltet, die durch je einen Dichtungsring 31 einer Ausflussöffnung 35 bzw. Einflussöffnungen 33, 34 einer Stehscheibe 32 angeschlossen sind. Die Stehscheibe 32 und das Mengenverhältnis-Steuerelement 15 bilden – wie die Steuerelemente 14, 15 – eine Plattendichtung, und sind z.B. aus Keramikmaterial hergestellt. Die Dichtungsringe 31 drücken die Stehscheibe 32 – auch ohne Flüssigkeitsdruck – auf die untere Stirnfläche des Mengensteuerelementes 15. Zur Führung des Dreharmes 17 und zur Verhinderung seiner axialen Bewegung dient ein Schlitzring 36, der aus Kunststoff hergestellt ist.

Der Drehknopf 16 ist zu einer stehenden Führungsscheibe 38 durch eine Schraube 37 befestigt. Aus der Führungsscheibe 38 ist eine in radialer Richtung durchgehende Kerbe 39 ausgespart, in der das Mischverhältnis-Steuerelement 14 gegen eine Feder 40 verschiebbar angeordnet ist. Wie es aus Fig. 1–3 zu ersehen ist, befinden sich der Drehknopf 16 und der Dreharm 17 in einer koaxialen Lage. Nach Fig. 2 belastet die Feder 40 das Mischverhältnis-Steuerelement 14 und versucht es in der Kerbe 39 zu verschieben. Dies ist damit verbunden, dass das andere Ende des Mischverhältnis-Steuerelementes 14 mit einer inneren, exzentrisch angeordneten zylindrischen Steuerbahn 41 des Drehknopfes 16 ständig zusammenwirkt. In diesem Fall verfügt der Drehknopf 16 über einen Drehbereich von 180°.

Die stehende Führungsscheibe 38 ist zum Zwischenstück 29 über Abstandbuchsen 43 mit Schrauben 42 befestigt (Fig. 1). Die Abstandbuchsen 43 sind in Bohrungen 44 der Stehscheibe 32 locker eingesetzt und verhindern deren Verdrehung. Die Abstandbuchsen 43 dienen darüber hinaus zur Begrenzung der Drehbewegung des Mengensteuerelements 15, wobei die Seitenflächen 28 der Aufsätze 27 an den Abstandbuchsen 43 anschlagen, angebend dadurch den Regelungsbereich von 90°.

In Fig. 1–3 befindet sich das Mischverhältnis-Steuerelement 14 in Mittelstellung. Der Kopf einer der Schrauben 42 begrenzt die Drehbewegung des Drehknopfes 16, wozu am Innenteil des Drehknopfes 16 eine Kerbe 46 ausgeformt ist (Fig. 1).

Gemäss Fig. 1–3 ist das Mischverhältnis-Steuerelement 14 mit einer, aus leicht gleitbarem Kunststoff hergestellten Kappe 45 versehen, um das zur Verdrehung des Drehknopfes 16 erforderliche Drehmoment zu dämpfen. Der Auslass 13 des Zwischenstückes 29 ist mit einem Ausflussschnabel 47 des Ventilgehäuses 10 verbunden.

In diesem Fall sind die Einflussöffnungen 33, 34 der Stehscheibe 32 so ausgebildet, dass diese – in ihrer in Fig. 4 mit gestrichelter Linie dargestellten Lage – den vollen Öffnungsquerschnitt der Einflussöffnungen 19, 20 des Mengensteuerelementes 15 aufnehmen können. Dazu sind die Einflussöffnungen 33, 34 ebenfalls mit den äusseren und inneren Kreisbögen $R_1$ bzw. $R_2$ begrenzt (Fig. 10).

Das obige Mischventil gemäss der Erfindung arbeitet wie folgt:

Zunächst wird das Mischverhältnis (d.h. die Temperatur des Mischwassers) durch die Drehbewegung des Drehknopfes 16 eingestellt. Das Mischverhältnis-Steuerelement 14 befindet sich in Fig. 4–6 in Mittelstellung, in welcher seine Kerbe 23 den gleichen Öffnungsquerschnitt der Einflussöffnung 19 für Heisswasser und der Einflussöffnung 20 für Kaltwasser verbindet. In diesem Fall entspricht also die Temperatur der aus dem Mischventil austretenden Wassermischung dem Durchschnittswert der eintretenden heissen und kalten Wassertemperaturen.

Wird der Drehknopf 16 in der Pfeilrichtung 48 gedreht, bewegt sich das Mischverhältnis-Steuerelement 14 in der Kerbe 39 in radialer Richtung nach aussen. Somit wird die Kerbe 23 mit einem immer grösseren Öffnungsquerschnitt der Einflussöffnung 19 für Heisswasser, und einem immer kleineren Öffnungsquerschnitt der Einflussöffnung 20 für Kaltwasser verbunden, wodurch sich die Temperatur des Mischwassers erhöht. So verstellt man durch das Drehen des Drehknopfes 16 von links nach rechts das Mischventil zwischen der Stellung «ganz kalt» und der Stellung «ganz heiss».

Nachdem die gewünschte Temperatur des Mischwassers eingestellt wurde, kommt die Mengensteuerung. Durch Drehen des Dreharmes 17 und damit des Mengensteuerelementes 15 wird die gewünschte Mischwassermenge eingestellt. Das Mengensteuerelement 15 befindet sich in Fig. 1–3 in der «Zu»-Stellung. Je weiter der Dreharm 17 in die Richtung der «Ganzauf»-Stellung gedreht wird, desto grösser wird der Wasserdurchfluss durch das Mischventil. In der «Ganzauf»-Stellung verkehren die vollen Öffnungsquerschnitte der Einflussöffnungen 19, 20 mit den Einflussöffnungen 33 bzw. 34 der Stehscheibe 32. Es ist aber zu betonen, dass die Wassertemperatur während der Veränderung der Durchflussmenge unverändert (konstant) bleibt.

Gemäss der Erfindung ist auch eine solche Ausführung möglich, bei welcher die Steuerbahn 41 mit beiden Enden des Mischverhältnis-Steuerelementes 14 zusammenwirkt. In diesem Falle ist die Feder 40 nicht mehr nötig.

Das erfindungsgemässe Mischventil ist aber nicht nur zur Mischung von heissem und kaltem Wasser, sondern von zwei beliebigen Flüssigkeiten geeignet.

**Patentansprüche**

1. Mischventil für Flüssigkeiten, insbesondere kaltes und heisses Wasser, mit einem Ventilgehäuse (10), das mit zwei Einflüssen (11, 12), einem Ausfluss (13), sowie einem bewegbaren Mischverhältnis-Steuerelement (14) und einem bewegbaren Mengensteuerelement (15) versehen ist, wobei das Mischverhältnis-Steuerelement (14) und das Mengensteuerelement (15) eine Plattendichtung bilden, das eine Steuerelement mit einem Regelorgan mitdrehbar und das andere Steuerelement mit einem Regelorgan verschiebbar angeordnet ist, ein Steuerelement (15) eine mit dem Ausfluss (13) verkehrende Ausflussöffnung (18) und zwei dazu symmetrisch angeordnete, mit den Einflüssen (11 bzw. 12) in Verbindung bringbare Einflussöffnungen (19, 20) aufweist, die mit einem äusseren und einem inneren Kreisbogen ($R_1$ bzw. $R_2$) begrenzt sind, und ein Steuerelement (14) am seiner dem anderen Steuerelement (15) zugekehrten Stirnseite eine Kerbe (23) hat, die mit der Ausflussöffnung (18) des anderen Steuerelements (15) in Verbindung steht und mit dessen Einflussöffnungen (19, 20) in Verbindung bringbar ausgebildet ist, sowie Abrundungsradien (25) der Kerbe (23) mit dem inneren Kreisbogen ($R_2$) der Einflussöffnungen (19, 20) übereinstimmen, dadurch gekennzeichnet, dass

– die mechanische Verstelleinrichtung der beiden bewegbaren Steuerelement (14, 15) aus zwei voneinander unabhängig betätigbaren Regelorganen (16, 17) besteht,
– das Mischverhältnis-Steuerelement (14) radial verschiebbar und das Mengensteuerelement (15) drehbar angeordnet ist,
– der Ausfluss (13) und die Ausflussöffnung (18) koaxial mit der Gehäuseachse angeordnet sind,
– die Einflussöffnungen (19, 20) symmetrisch zur Ausflussöffnung (18) angeordnet sind.

2. Mischventil nach Anspruch 1, dadurch gekennzeichnet, dass das Regelorgan für das Mengensteuerelement (15) als ein Dreharm (17) ausgestaltet ist, der mindestens mit einem Aufsatz (27) des Mengensteuerelements (15) verbunden ist, wobei Seitenflächen (28) des Aufsatzes (27) die Drehbewegung des Mengensteuerelements (15) begrenzen, und dass das Regelorgan für das Mischverhältnis-Steuerelement (14) als ein Drehknopf (16) ausgebildet und mit dem Dreharm (17) koaxial angeordnet ist, wobei der Drehknopf (16) mit einer exzentrisch angeordneten zylindrischen Steuerbahn (41) versehen ist, mit der das – in einer Kerbe (39) einer stehenden Führungsscheibe (38) in radialer Richtung verschiebbar angeordnete – Mischverhältnis-Steuerelement (14) zusammenwirkt.

3. Mischventil nach Anspruch 1 oder 2, dadurch gekennzeichnet, dass das Mengensteuerelement (15) mit einer Stehscheibe (32) eine Plattendichtung bildet, und die Stehscheibe (32) mit einer mit der Ausflussöffnung (18) des Mengensteuerelements (15) verkehrenden Ausflussöffnung (35) sowie mit einerseits mit den Einflüssen (11, 12) verbundenen, andererseits mit den Einflussöffnungen (19, 20) des Mengensteuerelements (15) in Verbindung bringbaren Einflussöffnungen (33 bzw. 34) versehen ist.

**Claims**

1. Mixing valve for fluids, in particular cold and hot water, with a valve housing (10), which is provided with two inlets (11, 12), one outlet (13) and a displaceable mixture-ratio control element (14) and a displaceable volume control element (15), the mixture-ratio control element (14) and the volume control element (15) forming a plate seal, one control element being disposed so as to be rotable together with a regulating device and the other control element being disposed so as to be displaceable with a regulating device, one control element (15) having an outlet opening (18) communicating with the outlet (13), and two inlet openings (19, 20), which are disposed symmetrically to the outlet opening (18) and which can be connected to the inlet openings (11 or 12), and which are defined by one outer and one inner arc ($R_1$ or $R_2$), and one control element (14) having, on its front face towards the other control element (15), a slot (23), which is connected to the outlet opening (18) of the other control element (15) and is designed such that it can be connected to the inlet openings (19, 20) thereof, and the radii of curvature (25) of the slot (23) corresponding to the inner arc ($R_2$) of the inlet openings (19, 20), characterised in that
– the mechanical setting mechanism of the two displaceable control elements (14, 15) comprises two regulating devices (16, 17) which can be operated independently of each other,
– the mixture-ratio control element (14) is arranged so as to be radially displaceable and the volume control element (15) is arranged so as to be rotatable,
– the outlet (13) and the outlet opening (18) are disposed coaxially in relation to the housing axis,
– the inlet openings (19, 20) are disposed symmetrically to the outlet opening (18).

2. Mixing valve according to claim 1, characterised in that the regulating device for the volume control element (15) is designed as a rotary arm (17), which is connected to at least one attachment (27) of the volume control element (15), the lateral surfaces (28) of the attachment (27) limiting the rotational movement of the volume control element (15), and the regulating device for the mixture-ratio control element (14) is designed as a rotating knob (16) and is disposed coaxially in relation to the rotary arm (17), the rotating knob (16) being provided with an eccentrically disposed cylindrical control path (41), with which the mixture ratio-control element (14) co-operates, which is disposed so as to be displaceable in a radial direction in a slot (39) of a stationary guide disc (38).

3. Mixing valve according to claim 1 or 2, characterised in that the volume control element (15) together with a stationary disc (32) forms a plate seal, and the stationary disc (32) is provided with an outlet opening (35) communicating with the outlet opening (18) of the volume control element (15) and inlet openings (33 or 34), which are connected to the inlets (11, 12) on the one hand, and which can be connected to the inlet openings (19, 20) of the volume control element (15) on the other hand.

**Revendications**

1. Robinet mélangeur pour liquides, en particulier pour eau froide et eau chaude, avec un corps de robinet (10) qui est pourvu de deux entrées (11, 12), d'une sortie (13) ainsi que d'un élément mobile de réglage des proportions du mélange (14) et d'un élément mobile de réglage de débit (15), l'élément de réglage des proportions du mélange (14) et l'élément de réglage du débit (15) constituant un joint d'étanchéité à plaques, l'un des éléments de réglage étant monté mobile en rotation avec un organe de manœuvre et l'autre élément de réglage étant monté coulissant avec un organe de manœuvre, un des éléments de réglage (15) présentant une ouverture de sortie (18) en communication avec la sortie (13) et deux ouvertures d'entrée (19, 20) disposées symétriquement par rapport à l'ouverture de sortie et pouvant être mises en liaison avec les ouvertures d'entrée (11, 12) qui sont limitées par un arc de cercle extérieur ($R_1$) et par un arc de cercle intérieur ($R_2$), et l'un des éléments de réglage (14) possédant sur sa face frontale tournée vers l'autre élément de réglage (15) un évidement borgne (23) qui est en liaison avec l'ouverture de sortie (18) de l'autre élément de réglage (15) et peut être mis en liaison avec les ouvertures d'entrée (19, 20) de cet élément, les rayons des arrondis (25) de l'évidement borgne (23) concordant avec l'arc de cercle intérieur ($R_2$) des ouvertures d'entrée (19, 20), caractérisé en ce que,
– le dispositif mécanique de manœuvre des deux éléments mobiles de réglage (14, 15) est constitué par deux organes de manœuvre (16, 17) pouvant être actionnés indépendamment l'un de l'autre;
– l'élément de réglage des proportions du mélange (14) est monté coulissant en sens radial et l'élément de réglage du débit (15) est monté tournant;
– la sortie (13) et l'ouverture de sortie (18) sont disposées coaxialement à l'axe du corps de robinet;
– les ouvertures d'entrée (19, 20) sont disposées symétriquement par rapport à l'ouverture de sortie (18).

2. Robinet mélangeur selon la revendication 1, caractérisé en ce que l'organe de manœuvre pour l'élément de réglage du débit (15) est un bras tournant (17) qui est relié à au moins un talon (27) de l'élément de réglage du débit (15), les faces latérales (28) du talon (27) limitant le mouvement de rotation de l'élément de réglage du débit (15), et en ce que l'organe de manœuvre pour l'élément de réglage des proportions du mélange (14) est un bouton tournant (16) disposé coaxialement au bras tournant (17), le bouton tournant (16) étant pourvu d'une surface de réglage (41) cylindrique disposée excentriquement avec laquelle coopère l'élément de réglage des proportions du mélange (14) monté coulissant en sens radial dans une encoche (39) d'un disque de guidage (38) fixe.

3. Robinet mélangeur selon la revendication 1 ou 2, caractérisé en ce que l'élément de réglage du débit (15) constitue avec un disque fixe (32) un joint d'étanchéité à plaques, et le disque fixe (32) est pourvu d'une ouverture de sortie (35) en communication avec l'ouverture de sortie (18) de l'élément de réglage du débit (15), ainsi que d'ouvertures d'entrée (33, 34) reliées d'une part avec les entrées (11, 12) et pouvant d'autre part être mises en communication avec les ouvertures d'entrée (19, 20) de l'élément de réglage du débit (15).

Fig.1

Fig.2

0 044 325

Fig.3

Fig.5

Fig.6

Fig.4

9

Fig.7

Fig.8

Fig.9

Fig.10

0 044 325